(19) Europäisches Patentamt
European Patent Office
Office européen des brevets

(11) Veröffentlichungsnummer: **0 156 155**
**B1**

(12) # EUROPÄISCHE PATENTSCHRIFT

(45) Veröffentlichungstag der Patentschrift: **29.04.87**

(51) Int. Cl.⁴: **D 06 M 15/576,** C 08 F 283/00 // (C08F283/00, 220:24)

(21) Anmeldenummer: **85101728.5**

(22) Anmeldetag: **16.02.85**

(54) **Wässrige Dispersionen von Pfropfpolymerisaten oder -copolymerisaten, ein Verfahren zu ihrer Herstellung und ihre Verwendung als Hydrophobierungs- und Oleophobierungsmittel für Textilien.**

(30) Priorität: **29.02.84 DE 3407362**

(43) Veröffentlichungstag der Anmeldung: **02.10.85 Patentblatt 85/40**

(45) Bekanntmachung des Hinweises auf die Patenterteilung: **29.04.87 Patentblatt 87/18**

(84) Benannte Vertragsstaaten: **BE DE FR GB IT NL**

(56) Entgegenhaltungen: **US-A-3 068 187**

(73) Patentinhaber: **BAYER AG, Konzernverwaltung RP Patentabteilung, D-5090 Leverkusen 1 Bayerwerk (DE)**

(72) Erfinder: **König, Joachim, Dr., Auf dem Broich 25, D-5068 Odenthal (DE)**
Erfinder: **Süling, Carlhans, Dr., Carl- Leverkus-Strasse 10, D-5068 Odenthal (DE)**
Erfinder: **Nachtkamp, Klaus, Dr., Leuchterstrasse 112, D-5000 Köln 80 (DE)**

**EP 0 156 155 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft wäßrige Dispersionen von Pfropfpolymerisaten oder -copolymerisaten von ethylenisch ungesättigten Perfluoralkylmonomeren, die als Pfropfgrundlage wäßrige Polyurethandispersionen enthalten, ein Verfahren zur Herstellung dieser Dispersionen durch Polymerisation oder Copolymerisation von ethylenisch ungesättigten Perfluoralkylmonomeren und gegebenenfalls Perfluoralkylgruppen-freien Comonomeren in wäßrigen Polyurethandispersionen als Pfropfgrundlage und ihre Verwendung als Hydrophobierungs- und Oleophobierungsmittel für Textilien.

Polymere mit Perfluoralkylgruppen sind geeignete Substanzen, um Textilien oder Teppiche hydrophob und oleophob auszurüsten. Diese Polymere können in Form von wäßrigen Emulsionen eingesetzt werden.

Die Herstellung wäßriger Emulsionen nach bekannten Verfahrensweisen der Emulsionspolymerisation ist jedoch schwierig, da ethylenisch ungesättigte Perfluoralkylmonomere extrem wasserunlöslich sind und in Wasser keine stabilen Emulsionen erhalten werden können.

In US-A- 3 403 122 ist ein Verfahren beschrieben, Perfluoralkylpolymere in wäßrigen Medien, die zur Erhöhung der Monomerlöslichkeit 5 bis 50 % an wasserlöslichen, organischen Substanzen z.B. Aceton oder Methanol enthalten, nach der Verfahrensweise der Emulsionspolymerisation herzustellen. Man erhält jedoch auf diese Weise grobe und wenig lagerstabile Dispersionen. Zudem sind wasserlösliche, organische Solventen wie Aceton oder Methanol Fällmittel für viele Polymere, so daß dieses Verfahren bei vielen der üblicherweise eingesetzten Copolymerisationssystemen nicht angewendet werden kann.

Die US-A- 3 068 187 beschreibt segmentierte Copolymere d.h. Block- oder Pfropfcopolymere von ethylenisch ungesättigten Perfluoralkylmonomeren mit ethylenisch ungesättigten Monomeren, die weniger als 10 % Fluor enthalten, sowie ihre Herstellung nach der Verfahrensweise der Emulsionspolymerisation, wobei das weniger als 10 % Fluor enthaltende Monomer, z.B. Butadien oder Chloropren in wäßriger Emulsion vorpolymerisiert wird und anschließend oder gleichzeitig das Perfluoralkylmonomer auf diese Voremulsion aufpolymerisiert wird. Jedoch ist auch in diesen Fällen der Zusatz von wasserlöslichen Solventen wie Aceton oder Methanol erforderlich, wodurch die Stäbilität der erhaltenen Emulsion herabgesetzt wird oder sogar vollständige Koagulation eintritt.

Um diese Nachteile zu vermeiden, wird zur Herstellung von entsprechenden "Perfluoralkylpolymerisatemulsionen" meist das Verfahren der Lösungspolymerisation angewendet, wobei als Reaktionsmedium üblicherweise wasserunlösliche Solventien z.B. Methylisobutylketon, Halogenkohlenwasserstoffe oder Essigsäureester dienen, die als Lösungsmittel sowohl für die Monomeren als auch für die Polymeren geeignet sind. Durch Emulgierung dieser Polymerlösung in Wasser mit Hilfe spezieller Emulgieraggregate oder Homogenisatoren ist es meist möglich, genügend feinteilige und lagerstabile Dispersionen zu gewinnen. Dieses Verfahren ist jedoch durch die notwendige weitere Verfahrensstufe der Emulgierung umständlich und aufwendig, so daß weiterhin der Wunsch nach einer technisch einfacheren Verfahrensweise der Emulsionspolymerisation besteht.

Es wurde nun gefunden, daß man lagerstabile, hydrophobierend und oleophobierend wirkende Dispersionen erhalten kann, wenn man in Gegenwart von wäßrigen Polyurethandispersionen die nachstehend näher beschriebenen ethylenisch ungesättigten Perfluoralkylmonomeren, vorzugsweise in Kombination mit weiteren Vinylmonomeren nach der Verfahrensweise einer Pfropfpolymerisation polymerisiert. Unabhängig von der Pfropfausbeute wird die Gesamtmenge an polymerisierten Monomeren als "Pfropfauflage" bezeichnet.

In DE-A- 1 953 345, DE-A- 1 953 348 und DE-A- 1 953 349 wird zwar schon die Herstellung von wäßrigen Dispersionen von Polymerisaten ethylenisch ungesättigter Monomerer in wäßrigem Polyurethan- bzw. Oligourethandispersionen beschrieben, jedoch ist der erfindungsgemäß aufgefundene Befund der Herstellbarkeit von lagerstabilen Dispersionen von Pfropfpolymerisaten oder -copolymerisaten ethylenisch ungesättigter Perfluoralkylmonomerer auch im Hinblick auf die Offenbarung dieser Vorveröffentlichungen als überraschend zu bezeichnen, da aus den in den Vorveröffentlichungen genannten Monomeren auch auf anderem Wege stabile Polymerisatemulsionen herstellbar sind, so daß nicht erwartet werden konnte, daß die genannten, mit der Herstellung von wäßrigen Dispersionen von Perfluoralkylpolymeren zusammenhängenden Schwierigkeiten durch die Verwendung von wäßrigen Polyurethandispersionen als Pfropfgrundlage überwunden werden können. Die nachstehend näher beschriebenen erfindungsgemäßen Dispersionen zeichnen sich im übrigen gegenüber den Dispersionen der zuletzt genannten Vorveröffentlichungen dadurch aus, daß sie hervorragende Oleophobierungsmittel für Textilien darstellen.

Gegenstand der Erfindung sind wäßrige Dispersionen von Pfropfpolymerisaten oder Pfropfcopolymerisaten, die als Pfropfgrundlage eine wäßrige, gegebenenfalls blockierte Polyisocyanate als Vernetzer dispergiert enthaltende, Polyurethandispersion und als Pfropfauflage ein Polymerisat oder ein Copolymerisat aus ethylenisch ungesättigten Monomeren enthalten, dadurch gekennzeichnet, daß die Pfropfauflage ein Polymerisat aus ethylenisch ungesättigten Perfluoralkylmonomeren, die mindestens fünf perfluorierte Kohlenstoffatome in Form von Perfluoralkylgruppen und ein bei mindestens 368 liegendes Molekulargewicht aufweisen, oder ein Copolymerisat derartiger Perfluoralkylmonomerer mit Perfluoralkylgruppen-freien Comonomeren, in welchem das Gewichtsverhältnis von Perfluoralkylmonomeren zu Perfluoralkylgruppen-freien Comonomeren bei mindestens 3:2 liegt, darstellt, wobei die Menge des Polymerisats oder des Copolymerisats einem Gewichtsverhältnis von dispergiertem Polyurethanfeststoff zu ethylenisch ungesättigten Monomeren von 1:0,25 bis 1:9 entspricht.

Gegenstand der Erfindung ist auch ein Verfahren zur Herstellung dieser Dispersionen durch Polymerisation

oder Copolymerisation von ethylenisch ungesättigten Monomeren oder von Gemischen von ethylenisch ungesättigten Monomeren in wäßrigen, gegebenenfalls blockierte Polyisocyanate als Vernetzer dispergiert enthaltenden, Polyurethandispersionen als Pfropfgrundlage, dadurch gekennzeichnet, daß man als ethylenisch ungesättigte Monomere ethylenisch ungesättigte Perfluoralkylmonomere eines bei mindestens 368 liegenden Molekulargewichts, die mindestens 5 perfluorierte Kohlenstoffatome in Form von Perfluoralkylgruppen aufweisen oder Gemische derartiger Perfluoralkylmonomerer mit Perfluoralkylgruppen-freien ethylenisch ungesättigten Monomeren im Gewichtsverhältnis von Perfluoralkylmonomeren zu Perfluoralkylgruppen-freien Monomeren von mindestens 3:2 verwendet, wobei die Menge der Monomeren so bemessen ist, daß pro 100 Gewichtsteilen dispergiertem Polyurethanfeststoff 25 bis 900 Gewichtsteile der Monomeren zur Verfügung stehen.

Gegenstand der Erfindung ist auch die Verwendung dieser Disperisionen als Hydrophobierungs- und Oleophobierungsmittel für Textilien.

Gegenstand der Erfindung ist schließlich auch die Verwendung von Dispersionen zur Herstellung von Überzügen auf hitzeresistenten Substraten, dadurch gekennzeichnet, daß man blockierte Polyisocyanate als Vernetzer dispergiert enthaltende Dispersionen der erfindungsgemäßen Art zur Herstellung der Überzüge einsetzt und diese durch kurzzeitiges Erhitzen auf über 100°C liegende Temperaturen in eine vernetzte Beschichtung überführt.

Für das erfindungsgemäße Verfahren als Pfropfgrundlage geeignete wäßrige Polyurethandispersionen sind alle beliebigen wäßrigen Dispersionen von Polyurethanen bzw. von Polyurethan-Polyharnstoffen. Diese Dispersionen weisen im allgemeinen einen Feststoffgehalt von 5 bis 60, vorzugsweise 30 bis 50 Gew.-% auf. Besonders gut geeignet sind wäßrige Dispersionen von Polyurethanen, die eingebaute ionische und/oder nicht-ionische hydrophile Zentren enthalten. Derartige Dispersionen bzw. ihre Herstellung sind z.B. in US-A- 3 479 310, DE-C- 1 495 745, DE-B- 1 495 847, US-A- 3 920 598, US-A- 3 905 929, US-A- 4 108 814, US-A- 4 092 286, US-A- 4 190 566, US-A- 4 237 264, US-A- 4 238 378, DE-A- 2 725 589, DE-A- 2 732 131, DE-A- 2 811 148, US-A- 4 269 748, US-A- 4 292 226 oder DE-A- 3 137 748 beschrieben. Besonders hochwertige erfindungsgemäße Dispersionen werden dann erhalten, wenn als Pfropfgrundlage wäßrige Polyurethandispersionen eingesetzt werden, die blockierte Polyisocyanate als Vernetzer dispergiert enthalten. Die Herstellung derartiger Polyurethandispersionen ist in der letztgenannten DE-A- 3 137 748 offenbart.

Bei den erfindungswesentlichen, ethylenisch ungesättigten Perfluoralkylmonomeren handelt es sich um beliebige ethylenisch ungesättigte Verbindungen, die mindestens fünf perfluorierte Kohlenstoffatome in Form von Perfluoralkylgruppen aufweisen, wobei unter "Perfluoralkylgruppen" gesättigte, perfluorierte, aliphatische Radikale zu verstehen sind, die eine lineare, verzweigte oder auch cyclische Struktur aufweisen können. Die geeigneten Perfluoralkylmonomeren weisen ein bei mindestens 368 liegenden Molekulargewicht auf. Geeignete derartige Perfluoralkylmonomere sind insbesondere Acrylate oder Methacrylate der allgemeinen Formeln

$$C_nF_{2n+1}CH_2CH_2O\underset{\underset{O}{\|}}{C}-\underset{\underset{R}{|}}{C}=CH_2 \qquad \text{oder}$$

$$C_nF_{2n+1}SO_2\underset{\underset{R'}{|}}{N}.CH_2CH_2O\underset{\underset{O}{\|}}{C}-\underset{\underset{R}{|}}{C}=CH_2 \quad ,$$

wobei in diesen Formeln
R für Wasserstoff oder eine Methylgruppe steht,
R' für Wasserstoff oder eine Alkylgruppe mit 1 bis 6 Kohlenstoffatomen steht und
n für 5 oder eine ganze Zahl größer als 5, vorzugsweise 5 bis 12 steht.

Beispiele derartiger Perfluoralkylmonomerer sind N-Methyl-N-perfluorpentansulfonamidoethylmethacrylat, N-Methyl-perfluoroctansulfonamidoethylacrylat, N-Methyl-N-perfluoroctansulfonamidoethylmethacrylat, N-Ethyl-N-perfluoroctansulfonamidoethylmethacrylat, N-Propyl-N-perfluoroctansulfonamidoethylacrylat, N-Hexyl-N-perfluordodecansulfonamidoethylacrylat, oder in 2-Stellung des Ethylrests Perfluorpentyl-, Perfluoroctyl- oder Perfluordodecyl-substituierte Ethylacrylate bzw. -methacrylate. Selbstverständlich können auch Mischungen der beispielhaft genannten Perfluoralkylmonomereren eingesetzt werden.

Neben den beispielhaft genannten Perfluoralkylmonomeren können auch weitere, Perfluoralkylgruppen-freie Comonomere mitverwendet werden. Falls derartige Comonomere mitverwendet werden, liegt das Gewichtsverhältnis von Perfluoralkylmonomeren zu Perfluoralkylgruppen-freien Comonomeren bei mindestens 3:2, vorzugsweise bei mindestens 2:1.

Geeignete derartige Perfluoralkylgruppen-freie Comonomere sind beispielsweise Butadien, Isopren, Chloropren, Styrol, α-Methylstyrol, p-Methylstyrol, Vinylhalogenide wie Vinylchlorid, Vinylidenchlorid, Vinylidenfluorid, Vinylester wie Vinylacetat, Vinylpropionat, Vinylstearat, Vinylmethylketon, Acrylsäure, Methacrylsäure, Maleinsäureanhydrid, Acrylsäureester oder Methacrylsäureester wie Methylacrylat, Methylmethacrylat, Ethylacrylat, Ethylmethacrylat, Propylacrylat, Butylacrylat, 2-Ethyl-hexylacrylat oder -methacrylat, Decylacrylat, Laurylacrylat oder -methacrylat, Stearylmethacrylat, N,N-Dimethylaminoethylmethacrylat, 2-Hydroxyethylmethacrylat, 2-Hydroxypropylmethacrylat, Glycidylmethacrylat, Acrylamid, Methacrylamid, N-Methylolacrylamid, Acrylnitril, Methacrylnitril oder N-substituierte Maleinimide. Geeignet sind auch Mischungen dieser Comonomeren.

Bei der Durchführung des erfindungsgemäßen Verfahrens wird die Gesamtmenge der ethylenisch ungesättigten Monomeren so bemessen, daß pro 100 Gew.-Teilen dispergiertem Polyurethanfeststoff 25 bis 900, vorzugsweise 50 bis 500 Gew.-Teile der ethylenisch ungesättigten Monomeren zur Verfügung stehen.

Die Pfropfreaktion wird üblicherweise unter Vorlage der Polyurethandispersion als Pfropfgrundlage durchgeführt, wobei die ethylenisch ungesättigten Perfluoralkylmonomeren sowie gegebenenfalls die Perfluoralkylgruppen-freien Comonomeren der Vorlage in flüssiger Form, z.B. als Monomerengemisch, als Lösung oder als wäßrige Emulsion zudosiert werden und mit radikalischen Initiatoren auf die Pfropfgrundlage aufpolymerisiert bzw. aufgepfropft werden. Zur Bereitung der Lösung oder der wäßrigen Emulsion werden bevorzugt in Wasser schwerlösliche oder unlösliche, vorzugsweise polare Lösungsmittel eingesetzt, die jedoch als Lösungsmittel für die Perfluoralkylmonomeren sowie die gegebenenfalls verwendeten Perfluoralkylgruppen-freien Comonomeren geeignet sind. Beispiele sind Ketone wie Methylisobutylketon, Fettsäureester wie Essigsäuremethylester, Essigsäureethylester, Essigsäurebutylester, Propionsäureethylester oder Halogenkohlenwasserstoffe wie Methylenchlorid, Chloroform, Tetrachlorkohlenstoff, Tetrachlorethan, Fluortrichlormethan, 1,1,2-Trifluor-1,2,2-trichlorethan. Gemische der beispielhaft genannten Lösungsmittel können selbstverständlich ebenfalls verwendet werden. Besonders bevorzugt gelangen die Monomeren in Form von wäßrigen Monomeremulsionen zum Einsatz, die beispielsweise durch intensives Vermischen einer Lösung der Monomeren in einem der beispielhaft genannten Lösungsmittel mit Wasser in Gegenwart geeigneter Emulgatoren der nachstehend beispielhaft genannten Art erhalten werden können. Im allgemeinen kommen bei der Durchführung des erfindungsgemäßen Verfahrens 10 bis 60-gew.-%ige Lösungen oder Emulsionen der Monomeren zum Einsatz. Es ist natürlich ebenfalls möglich, das gegebenenfalls mitverwendete (flüssige) Perfluoralkylgruppen-freie Comonomere als Lösungsmittel für das Perfluoralkylmonomere zu benutzen.

Die Pfropfreaktion wird vorzugsweise in Gegenwart von üblichen radikalbildenden Initiatoren durchgeführt. Geeignet sind wasserlösliche Initiatoren, z.B. Kalium-, Natrium- oder Ammoniumpersulfat oder Wasserstoffperoxid, weiterhin Redoxsysteme aus Persulfat und z.B. Natriumdisulfit, Natriumhydrogensulfit oder Schwefeldioxid. Besonders geeignet sind öllösliche Initiatoren z.B. Dibenzoylperoxid, Diacetylperoxid, Dilauroylperoxid, Di-tert.-butylperoxid, tert.-Butylhydroperoxid, Cumolhydroperoxid, tert.-Butylperoctoat, Azoisobuttersäuredinitril usw.

Zur Verbesserung der Pfropfausbeuten ist der Einsatz sogenannter Pfropfaktivatoren möglich, d.h. von speziellen Substanzen oder Monomeren mit einer hohen Übertragungsaktivität, die bereits bei geringer Einsatzmenge die Pfropfausbeuten wesentlich erhöhen können. Beispiele sind Olefine wie Propylen oder Isobutylen, Vinylchlorid, Vinylacetat oder Triallylcyanurat. Ebenso ist die Verwendung von sogenannten Reglern, wie z.B. Allylverbindungen oder Mercaptanen zur Einstellung der Molekulargewichte möglich.

Zur Stabilisierung der erfindungsgemäßen Dispersionen und auch zur Herstellung der Monomeremulsionen, die beim erfindungsgemäßen Verfahren eingesetzt werden, können übliche anionenaktive, kationenaktive oder nichtionogene Emulgatoren eingesetzt werden. Beispiele für anionenaktive Emulgatoren sind Alkylsulfonate, Alkylarylsulfonate, Fettalkoholsulfate oder Sulfobernsteinsäureester, ferner Perfluoralkylgruppen-enthaltende Emulgatoren wie Ammonium- oder Tetraethylammoniumsalze der Perfluoroctansulfonsäure oder das Kaliumsalz des N-Ethyl-N-perfluoroctansulfonylglycins. Beispiele für kationenaktive Emulgatoren sind quartäre Ammonium-oder Pyridiniumsalze, z.B. Stearyldimethylbenzylammoniumchlorid oder N,N,N-Trimethyl-N-perfluoroctansulfonamidopropyl-ammoniumchlorid. Beispiele für nichtionogene Emulgatoren sind Polyglykolether, z.B. Ethylenoxid/Propylenoxid-Block- oder -Copolymere, Alkoxylierungsprodukte, insbesondere Ethoxylierungsprodukte von Fettalkoholen, Alkylphenolen, Fettsäuren, Fettsäureamiden, Sorbitanmonooleat oder von N-Alkyl-N-perfluoroctansulfonylglycin. Besonders geeignet sind Kombinationen von nichtionogenen Emulgatoren mit anionenaktiven oder kationenaktiven Emulgatoren der beispielhaft genannten Art.

Das erfindungsgemäße Verfahren wird im allgemeinen bei 20 bis 120°C, vorzugsweise 50 bis 100°C liegenden Temperaturen, gegebenenfalls unter Intergasatmosphäre (Stickstoff), und gegebenenfalls unter Druck durchgeführt, wobei die Monomeren und die Hilfs- und Zusatzmittel der vorgelegten Polyurethandispersion unter ständigem Durchmischen einverleibt werden. Wegen der ausgezeichneten Stabilität der erfindungsgemäßen Dispersionen ist es ohne weiteres möglich, Lösungsmittel oder flüchtige Restmonomere durch Entgasen in üblichen Destillationsapparaturen wie z.B. Rotationsverdampfern oder Dünnschichtern zu entfernen, ohne daß wie bei üblichen bekannten Emulsionen von Perfluoralkylpolymerisaten Koagulation eintritt. Nach Entgasung werden geruchsfreie Dispersionen erhalten, die eine hohe Lagerstabilität aufweisen. Der Feststoffgehalt der erfindungsgemäßen Dispersionen liegt, in Abhängigkeit von der Konzentration der vorgelegten Polyurethandispersion und der Menge des mit den Monomeren eingebrachten Wassers (und gegebenenfalls nicht entfernten Lösungsmittels), im allgemeinen bei 5 bis 50, vorzugsweise 10 bis 30 Gew.-%. Der Fluorgehalt im Feststoff liegt im allgemeinen bei 6 bis 50, vorzugsweise 10 bis 30 Gew.-%.

Aus den erfindungsgemäßen Dispersionen lassen sich Filme herstellen, die eine hervorragende Hydrophobie und Oleophobie aufweisen. Die Dispersionen sind hervorragend als Imprägniermittel geeignet, um Textilien aus natürlichen und synthetischen Fasern, Teppiche, Papier und Leder öl- und wasserabstoßend auszurüsten.

Erfindungsgemäße Dispersionen, die blockierte Polyisocyanate in dispergierter Form enthalten, können

durch kurzzeitiges Erhitzen der mit ihnen hergestellten Überzüge auf über 100°C liegende Temperaturen zu besonders hochwertigen vernetzten Beschichtungen verarbeitet werden.

In den nachfolgenden Beispielen beziehen sich alle Prozentabgaben auf Gewichtsprozente.

**Beispiele**

In den nachfolgenden Beispielen werden folgende Polyurethandispersionen verwendet:

**Polyurethandispersion A**

**Ansatz:**
900 g Polyesterdiol auf Basis Adipinsäure, Hexandiol und Neopentylglykol (Molekulargewicht 2000)
200 g N-Methylpyrrolidon
13,4 g Trimethylolpropan
53,6 g Dimethylolpropionsäure
40,4 g Triethylamin
393 g 4,4'-Diisocyanatodicyclohexylmethan
39,2 g Acetonazin
1788 g demineralisiertes Wasser

Aus dem bei 100°C im Vakuum entwässerten Polyester, dem N-Methylpyrrolidon, dem Trimethylolpropan, der Dimethylolpropionsäure und dem Triethylamin stellt man bei 60°C ein homogenes, klares Gemisch her. Dann gibt man das Diisocyanat zu und rührt ca. 2 Stunden bei 80°C, bis ein (korrigierter) NCO-Wert von 2,6 % erreicht ist.

Man kühlt auf 60°C ab und gibt zu dem erhaltenen Prepolymer das Acetonazin zu. Unter gutem Rühren läßt man dann das Wasser zulaufen. Die sich bildende feinteilige Dispersion wird 5 Stunden bei 70°C nachgerührt. Der Feststoffgehalt beträgt 40 % und die Fordbecherviskosität (4 mm-Düse) 30 Sekunden.

**Polyurethandispersion B**

**Ansatz:**
1200 g Polyesterdiol auf Basis Adipinsäure, Hexandiol und Neopentylglykol (Molekulargewicht 2000)
100 g N-Methylpyrrolidon
53,6 g Dimethylolpropionsäure
40,4 g Triethylamin
393 g 4,4'-Diisocyanatodicyclohexylmethan
146 g blockiertes Polyisocyanat 1)
39,2 g Acetonazin
2446 g demineralisiertes Wasser

Aus dem bei 100°C im Vakuum entwässerten Polyester, dem N-Methylpyrrolidon, der Dimethylolpropionsäure und dem Triethylamin stellt man bei 60°C ein homogenes, klares Gemisch her. Dann gibt man das Diisocyanat zu und rührt 2 bis 3 Stunden bei 80°C, bis ein (korrigierter)2) NCO-Wert von 2,3 % erreicht ist. Man kühlt auf 60°C ab und gibt zu dem erhaltenen Prepolymer nacheinander das blockierte Polyisocyanat 1) und das Acetonazin zu. Unter gutem Rühren läßt man dann das Wasser zulaufen, worauf sich eine feinteilige Dispersion bildet, die zuletzt 5 Stunden bei 70°C nachgerührt wird.

Die so erhaltene Dispersion hat einen Feststoffgehalt von 40 % und eine Fordbecherviskosität (4 mm-Düse) von 18 Sekunden.

1) Das blockierte Polyisocyanat wird wie folgt hergestellt:

Zu 1000 g einer 90 %igen Lösung eines durch Trimerisierung von Hexamethylendiisocyanat erhaltenen Isocyanurat - Polyisocyanats (NCO-Gehalt: 20,5 %, Lösungsmittel: Ethylglykolacetat) gibt man unter Kühlung 425 g Butanonoxim, verdünnt mit 345 g Ethylglykolacetat und läßt bei 60°C reagieren, bis im IR-Spektrum keine NCO-Bande (2250 $cm^{-1}$) mehr nachweisbar ist. Das erhaltene blockierte Polyisocyanat liegt in Form einer 75 %igen Lösung vor.

2) Der bei der üblichen Amin-Säure-Titration gefundene NCO-Wert ist durch das im Prepolymer vorhandene Triethylamin verfälscht.

**Beispiel 1**

Man bereitet folgende Lösungen bei 70° C:
**Lösung 1**
92,8 g N-Methyl-N-perfluoroctansulfonamidoethylmethacrylat
23,2 g Stearylmethacrylat
174 g Methylisobutylketon
6,0 g ethoxyliertes Sorbitanmonooleat, welches einen Gehalt von ca. 80 Ethylenoxideinheiten pro Molekül aufweist.
**Lösung 2**
302 g entionisiertes Wasser
6,0 g Kaliumsalz des N-Ethyl-N-perfluoroctansulfonylglycins
Durch Mischen von Lösung 1 und 2 mit Hilfe eines Ultraschall-Dispergators bereitet man eine Monomeremulsion 3, die zur nachfolgenden Pfropfreaktion eingesetzt wird.
In einen Rührkolben gibt man als Vorlage 300 g Polyurethan-Dispersion A und erwärmt unter $N_2$ auf 75° C. Bei 75° C dosiert man innerhalb 2 h gleichmäßig folgende Komponenten zu:
600 g Monomeremulsion 3 sowie als Lösung 4
6,0 g Dilauroylperoxid in 100 g Methylisobutylketon.
Anschließend rührt man 1 h bei 75° C nach, verdünnt mit 200 g entionisiertem Wasser und erhält eine stabile Dispersion ohne Feststoffausfall.
Zur Entgasung zieht man am Rotationsverdampfer bei 60° C und 200 mbar ca. 400 g Destillat ab. Man erhält als Rückstand 800 g einer stabilen, fast geruchsfreien Dispersion mit folgenden Analysendaten:.
Feststoffgehalt: 30,2 %
Fluorgehalt im Feststoff: 17,8 %.

**Beispiel 2**

Man bereitet folgende Lösungen bei 70° C
**Lösung 1**
69,6 g N-Methyl-N-perfluoroctansulfonamidoethylmethacrylat
46,4 g Butylacrylat
174 g Methylisobutylketon
6,0 g ethoxyliertes Sorbitanmonooleat, welches einen Gehalt von ca. 80 Ethylenoxideinheiten pro Molekül aufweist.
**Lösung 2**
302 g entionisiertes Wasser
6,0 g Kaliumsalz des N-Ethyl-N-perfluoroctansulfonylglycins
Durch Mischen von Lösung 1 und 2 mit Hilfe eines schnell laufenden Mischers bereitet man eine Monomeremulsion 3, die zur folgenden Pfropfreaktion eingesetzt wird:
In einen Rührkolben gibt man als Vorlage 300 g Polyurethan-Dispersion B und erwärmt unter $N_2$ auf 75° C. Bei 75° C dosiert man innerhalb 2 h gleichmäßig 600 g Monomeremulsion 3, sowie eine Lösung von 5,0 g Dilauroylperoxid in 100 g Methylisobutylketon zu. Anschließend rührt man 1 h bei 75° C nach, verdünnt mit 400 g entionisiertem Wasser und erhält eine stabile Dispersion ohne Feststoffausfall.
Die Dispersion kann am Rotationsverdampfer bei 60° C und 200 mbar unter Abziehen von ca. 400 g Destillat entgast werden. Man erhält 1000 g einer stabilen, fast geruchsfreien Dispersion mit folgenden Analysendaten:
Feststoffgehalt: 24,5 %
Fluorgehalt im Feststoff: 13,6 %

**Beispiel 3**

Man bereitet folgende Lösungen bei 60° C:
**Lösung 1**
92,8 g N-Methyl-N-perfluoroctansulfonamidoethylmethacrylat
23,2 g Stearylmethacrylat
174 g Essigsäureethylester
6,0 g ethoxyliertes Sorbitanmonooleat, welches einen Gehalt von ca. 80 Ethylenoxideinheiten pro Molekül aufweist.
**Lösung 2**
600 g entionisiertes Wasser
6,0 g Kaliumsalz des N-Ethyl-N-perfluoroctansulfonylglycins
Durch Mischen von Lösung 1 und 2 mit Hilfe eines Ultraschall-Dispergators bereitet man eine

Monomemulsion 3, die zur nachfolgenden Pfropfreaktion eingesetzt wird.

In einem Rührkolben gibt man als Vorlage 300 g Polyurethan-Dispersion A und erwärmt unter $N_2$ auf 75°C. Bei 75°C dosiert man innerhalb 2 h gleichmäßig 900 g Monomeremulsion 3, sowie eine Lösung von 6,0 g Dilauroylperoxid in 100 g Essigsäureethylester zu.

Man rührt 1 h bei 75°C nach, zieht 300 g Destillat am Rotationsverdampfer bei 60°C und 200 mbar unter Zugabe von 300 g entionisiertem Wasser ab und erhält 1200 g einer stabilen Dispersion mit folgenden Analysendaten:

Feststoffgehalt: 20,2 %

Fluorgehalt im Feststoff: 18,0 %.

**Beispiel 4**

Man bereitet folgende Lösungen bei 70° C:

**Lösung 1**

92,8 g N-Methyl-N-perfluoroctansulfonamidoethylmethacrylat

23,2 g Stearylmethacrylat

1,2 g Triallylcyanurat

174 g Methylisobutylketon

6,0 g ethoxyliertes Sorbitanmonooleat, welches einen Gehalt von ca. 80 Ethylenoxideinheiten pro Molekül aufweist.

**Lösung 2**

302 g entionisiertes Wasser

6,0 g Kaliumsalz des N-Ethyl-N-perfluoroctansulfonylglycins.

Durch Mischen von Lösung 1 und 2 mit Hilfe eines Ultraschalldispergators bereitet man eine Monomeremulsion 3, die zur folgenden Pfropfreaktion eingesetzt wird:

Man gibt in einen Rührkolben als Vorlage 300 g Polyurethan-Dispersion A und erwärmt unter $N_2$ auf 75°C. Bei 75°C dosiert man innerhalb 3 h gleichmäßig 600 g Monomeremulsion 3, sowie eine Lösung von 6,0 g Dilauroylperoxid in 100 g Methylisobutylketon zu.

Man rührt 30 min bei 80°C nach, zieht 300 g Destillat am Rotationsverdampfer bei 60°C und 200 mbar unter gleichzeitiger Zugabe von 300 g entionisiertem Wasser ab und erhält 1000 g einer stabilen Dispersion mit folgenden Analysedaten:

Feststoffgehalt: 24,4 %

Fluorgehalt im Feststoff: 17,3 %.

**Beispiel 5**

Man bereitet folgende Lösungen bei 70° C:

**Lösung 1**

97,4 g N-n-Propyl-N-perfluoroctansulfonamidoethylacrylat

18,6 g Ethylacrylat

0,8 g Triallylcyanurat

175 g Methylisobutylketon

5,6 g etoxyliertes Sorbitanmonooleat, welches einen Gehalt an ca. 80 Ethylenoxideinheiten pro Molekül aufweist.

**Lösung 2**

305 g entionisiertes Wasser

5,6 g Kaliumsalz des N-Ethyl-N-perfluoroctansulfonylglycins.

Durch Mischen von Lösung 1 und 2 mit Hilfe eines Ultraschalldispergators bereitet man eine Monomerenemulsion 3, die zur folgenden Pfropfreaktion eingesetzt wird:

Man gibt in einen Rührkolben als Vorlage 300 g Polyurethan-Dispersion A und erwärmt unter $N_2$ auf 75°C. Bei 75°C dosiert man inerhalb 3 h gleichmäßig 600 g Monomerenemulsion 3, sowie eine Lösung von 5,0 g Dilauroylperoxid in 80 g Methylisobutylketon zu.

Man rührt 30 min bei 80°C nach, zieht 300 g Destillat am Rotationsverdampfer bei 60°C und 200 mbar unter gleichzeitiger Zugabe von 300 g entionisiertem Wasser ab und erhält 1000 g einer stabilen Dispersion mit folgenden Analysedaten:

Feststoffgehalt: 23,8 %

Fluorgehalt im Feststoff: 17,9 %.

**Patentansprüche**

1. Wäßrige Dispersionen von Pfropfpolymerisaten oder Pfropfcopolymerisaten, die als Pfropfgrundlage eine wäßrige, gegebenenfalls blockierte Polyisocyanate als Vernetzer dispergiert enthaltende, Polyurethandispersion und als Pfropfauflage ein Polymerisat oder ein Copolymerisat aus ethylenisch ungesättigten Monomeren enthalten, dadurch gekennzeichnet, daß die Pfropfauflage ein Polymerisat aus ethylenisch ungesättigten Perfluoralkylmonomeren, die mindestens fünf perfluorierte Kohlenstoffatome in Form von Perfluoralkylgruppen und ein bei mindestens 368 liegendes Molekulargewicht aufweisen, oder ein Copolymerisat derartiger Perfluoralkylmonomerer mit Perfluoralkylgruppen-freien Comonomeren, in welchem das Gewichtsverhältnis von Perfluoralkyl-monomeren zu Perfluoralkylgruppen-freien Comonomeren bei mindestens 3:2 liegt, darstellt, wobei die Menge des Polymerisats oder des Copolymerisats einem Gewichtsverhältnis von dispergiertem Polyurethanfeststoff zu ethylenisch ungesättigten Monomeren von 1:0,25 bis 1:9 entspricht.

2. Verfahren zur Herstellung von wäßrigen Dispersionen von Pfropfpolymerisaten oder -copolymerisaten gemäß Anspruch 1 durch Polymerisation oder Copolymerisation von ethylenisch ungesättigten Monomeren oder von Gemischen von ethylenisch ungesättigten Monomeren in wäßrigen, gegebenenfalls blockierte Polyisocyanate als Vernetzer dispergiert enthaltenden Polyurethandispersionen als Pfropfgrundlage, dadurch gekennzeichnet, daß man als ethylenisch ungesättigte Monomere ethylenisch ungesättigte Perfluoralkylmonomere eines bei mindestens 368 liegenden Molekulargewichts, die mindestens 5 perfluorierte Kohlenstoffatome in Form von Perfluoralkylgruppen aufweisen oder Gemische derartiger Perfluoralkylmonomerer mit Perfluoralkylgruppen-freien ethylenisch ungesättigten Monomeren im Gewichtsverhältnis von Perfluoralkylmonomeren zu Perfluoralkylgruppen-freien Monomeren von mindestens 3:2 verwendet, wobei die Menge der Monomeren so bemessen ist, daß pro 100 Gewichtsteilen dispergiertem Polyurethanfeststoff 25 bis 900 Gewichtsteile der Monomeren zur Verfügung stehen.

3. Verfahren gemäß Anspruch 2, dadurch gekennzeichnet, daß man die ethylenisch ungesättigten Monomeren in Form einer Lösung in einem polaren Lösungsmittel oder in Form einer wäßrigen Emulsion einsetzt.

4. Verfahren gemäß Anspruch 2 und 3, dadurch gekennzeichnet, daß man als Pfropfgrundlage eine, blockierte Polyisocyanate als Vernetzer dispergiert enthaltende wäßrige Polyurethandispersion verwendet.

5. Verwendung der Dispersionen gemäß Anspruch 1 als Hydrophobierungs- und Oleophobierungsmittel für Textilien.

6. Verwendung von Dispersionen zur Herstellung von Überzügen auf hitzeresistenten Substraten, dadurch gekennzeichnet, daß man, blockierte Polyisocyanate als Vernetzer dispergiert enthaltende Dispersionen gemäß Anspruch 1 zur Herstellung der Überzüge einsetzt und diese durch kurzzeitiges Erhitzen auf über 100°C liegende Temperaturen in eine vernetzte Beschichtung überführt.

**Revendications**

1. Dispersions aqueuses de polymères greffés ou copolymères greffés contenant en tant que support de greffage une dispersion aqueuse de polyuréthanne contenant éventuellement, à l'état dispersé, des polyisocyanates bloqués en tant qu'agents réticulants et, en tant que polymère greffé, un polymère ou un copolymère de monomères à insaturation éthylénique, caractérisées en ce que le polymère greffé est un polymère de monomères perfluoralkylés à insaturation éthylénique contenant au moins 5 atomes de carbone perfluorés à l'état de groupes perfluoralkyles et présentant un poids moléculaire d'au moins 368, ou un copolymère de tels monomères perfluoralkylés avec des monomères exempts de groupes perfluoralkyles, dans lequel le rapport en poids entre les monomères perfluoralkylés et les comonomères exempts de groupes perfluoralkyles est d'au moins 3:2, la quantité du polymère ou du copolymère correspondant à un rapport en poids de 1:0,25 à 1:9 entre les matières solides de polyuréthanne en dispersion et les monomères à insaturation éthylénique.

2. Procédé de préparation de dispersions aqueuses de polymères ou copolymères greffés selon la revendication 1 par polymérisation ou copolymérisation de monomères à insaturation éthylénique ou de mélanges de monomères à insaturation éthylénique dans des dispersions aqueuses de polyuréthanne contenant éventuellement à l'état dispersé des polyisocyanates bloqués en tant qu'agents réticulants, ces dispersions servant de support de greffage, caractérisé en ce que l'on utilise en tant que monomères à insaturation éthylénique des monomères perfluoralkylés à insaturation éthylénique de poids moléculaire au moins 368, contenant au moins 5 atomes de carbone perfluorés à l'état de groupes perfluoralkyles ou des mélanges de tels monomères perfluoralkylés avec des monomères à insaturation éthylénique exempt de groupes perfluoralkyles dans un rapport en poids d'au moins 3:2 entre les monomères perfluoralkylés et les monomères exempts de groupes perfluoralkyles, la quantité des monomères étant réglée de manière à disposer de 25 à 900 parties en poids des monomères pour 100 parties en poids des matières solides de polyuréthanne en dispersion.

3. Procédé selon la revendication 2, caractérisé en ce que les monomères à insaturation éthylénique sont mis en oeuvre à l'état de solution dans un solvant polaire ou à l'état d'émulsion aqueuse.

4. Procédé selon les revendications 2 et 3, caractérisé en ce que l'on utilise en tant que support de greffage une dispersion aqueuse de polyuréthanne contenant des polyisocyanates bloqués en tant qu'agents réticulants.

5. Utilisation des dispersions selon la revendication 1 en tant qu'agents hydrofugeants et oléofugeants pour des textiles.

6. Utilisation des dispersions pour l'application de revêtements sur des supports résistants à la chaleur, caractérisée en ce que l'on utilise pour l'application des revêtements des dispersions selon la revendication 1 contenant à l'état dispersé des polyisocyanates bloqués en tant qu'agents réticulants et en ce que l'on convertit ces revêtements en revêtements réticulés par un court chauffage à des températures supérieures à 100°C.

**Claims**

1. Aqueous dispersions of graft polymers or graft copolymers which contain, as the graft substrate, an aqueous polyurethane dispersion optionally containing blocked polyisocyanates in dispersed form as crosslinker and, as the graft superstrate, a polymer or a copolymer of ethylenically unsaturated monomers, characterised in that the graft superstrate is a polymer of ethylenically unsaturated perfluoroalkyl monomers which contain at least five perfluorinated carbon atoms in the form of perfluoroalkyl groups and have a molecular weight of at least 368, or a copolymer of such perfluoroalkyl monomers with comonomers free from perfluoroalkyl groups in which the weight ratio of perfluoroalkyl monomers to comonomers free from perfluoroalkyl groups is at least 3:2, the quantity of the polymer or of the copolymer corresponding to a weight ratio of dispersed polyurethane solids to ethylenically unsaturated monomers of 1:0.25 to 1:9.

2. Process for the production of aqueous dispersions of graft polymers or copolymers according to Claim 1 by polymerising or copolymerising ethylenically unsaturated monomers or mixtures of ethylenically unsaturated monomers in aqueous polyurethane dispersions optionally containing blocked polyisocyanates in dispersed form as crosslinker, as the graft substrate, characterised in that the ethylenically unsaturated monomers used are ethylenically unsaturated perfluoroalkyl monomers which have a molecular weight of at least 368 and which contain at least 5 perfluorinated carbon atoms in the form of perfluoroalkyl groups or mixtures of such perfluoroalkyl monomers with ethylenically unsatrated monomers free from perfluoroalkyl groups, in a weight ratio of perfluoroalkyl monomers to monomers free from perfluoroalkyl groups of at least 3:2, the quantity of the monomers being such that 25 to 900 parts by weight of the monomers are available per 100 parts by weight of dispersed polyurethane solids.

3. Process according to Claim 2, characterised in that the ethylenically unsaturated monomers are used in the form of a solution in a polar solvent or in the form of an aqueous emulsion.

4. Process according to Claim 2 and 3, characterised in that an aqueous polyurethane dispersion containing blocked polyisocyanates in dispersedform as crosslinker is used as the graft substrate.

5. Use of the dispersions according to Claim 1 as hydrophobising and oleophobising agents for textiles.

6. Use of dispersions for producing coatings on heat-resistant substrates, characterised in that dispersions according to Claim 1, containing blocked polyisocyanates in dispersed form as crosslinker, are used for the production of the coatings and the latter are converted into a crosslinked coating by brief heating to temperatures above 100°C.